# EUROPÄISCHE PATENTSCHRIFT

(11) **EP 0 698 837 B1**
(45) Veröffentlichungstag und Bekanntmachung des Hinweises auf die Patenterteilung: **23.04.1997**
(21) Anmeldenummer: 95112025.2
(22) Anmeldetag: 31.07.1995
(51) Int. Cl.: G05B 19/042, G05B 19/414

(54) **Verfahren und Einrichtung zur periodischen Datenübertragung mit Broadcast-Funktion zum unabhängigen Datenaustausch zwischen externen Einheiten**
Method and apparatus for periodic data transfer with broadcast function for independent data exchange between external device units
Procédé et appareil de transfert de données périodique avec fonction de diffusion pour un échange indépendant de données entre unités périphériques externes

(30) Priorität: 12.08.1994 DE 4428676; 12.08.1994 DE 4428688
(43) Veröffentlichungstag der Anmeldung: 28.02.1996
(73) Patentinhaber: SIEMENS AKTIENGESELLSCHAFT, 80333 München (DE)
(72) Erfinder: Brune, Richard, Dipl. Ing., D-90765 Fürth (DE); Smyk, Michael, Dipl. Ing., D-91341 Röttenbach (DE); Schumacher, Jürgen, Dipl. Ing., D-90768 Fürth (DE); Rochholz, Günther, Dipl. Ing., D-91074 Herzogenaurach (DE)

(56) Entgegenhaltungen:
- EP-A- 0 033 228
- EP-A- 0 298 396
- EP-A- 0 490 864
- EP-A- 0 590 175
- GB-A- 2 211 000

## Beschreibung

Die Erfindung bezieht sich auf ein Verfahren und eine Einrichtung zur zyklischen Übertragung von Daten externer Einheiten über einen Peripheriebus zur Verarbeitung in einem Rechnersystem mit schnellerem Systembus sowie zwischen externen Einheiten untereinander.

Bei modernen industriellen Steuerungen zum Einsatz beispielsweise bei Werkzeugmaschinen oder Robotern stellt sich häufig die Aufgabe, eine Vielzahl unterschiedlichster Daten von örtlich entfernten Einheiten, im Falle einer Werkzeugmaschine z.B. Winkelpositionen einer umlaufender Welle oder die Referenzlage eines Werkstückes, an ein zentrales Rechnersystem zur Verarbeitung zu übertragen. Da die externen Einheiten in der Regel bis zu mehreren Metern entfernt von dem verarbeitenden Rechnersystem angeordnet sind, können die externen Einheiten nicht an den leistungsfähigen Systembus des verarbeitenden Rechnersystems angeschlossen werden, da aufgrund der Länge des Busses aus physikalischen Gründen die Geschwindigkeit der Übertragung nicht aufrechterhalten werden könnte. Eine hohe Datentransferrate auf dem Systembus des verarbeitenden Rechnersystems ist jedoch unerläßlich, um eine ausreichend hohe Rechengeschwindigkeit zu gewährleisten. Aus diesem Grund bedarf es der Verwendung eines eigenen Peripheriebusses zur Übertragung der Daten der externen Einheiten zu dem verarbeitenden Rechnersystem. Da dieser Peripheriebus jedoch in der Regel relativ zum Systembus langsamer ist, bedeutet ein direkter Zugriff des Prozessors des verarbeitenden Rechnersystems, daß der Prozessor die Abarbeitung seines Programmes unterbrechen muß und in den Wartezustand gehen muß (Ausführung sogenannter Wait-States) bis die erforderlichen Daten aus den externen Einheiten über den langsameren Peripheriebus übertragen wurden. Dieses Vorgehen ist uneffektiv und in Anbetracht der heute z.B. bei Werkzeugmaschinensteuerungen in kürzester Zeit zyklisch zu verarbeitenden Datenmengen nicht praktizierbar. Benötigt wird daher ein Verfahren, das es einerseits ermöglicht, die Wait-States zu minimieren und andererseits eine zyklische Abfrage und Übertragung der angeforderten Daten aus den externen Einheiten ermöglicht. Darüber hinaus muß berücksichtigt werden, daß die einzelnen externen Einheiten nicht unabhängig voneinander agieren können, sondern Abhängigkeiten zwischen ihnen bestehen. Aus diesem Grunde ist es in der Regel auch erforderlich, Daten zwischen den einzelnen externen Einheiten auszutauschen, um diese zu koordinieren.

Es ist bekannt, daß sogenannte Direct-Memory-Access-Controller zur Lösung dieses Problems herangezogen werden können ("Müller, H./Walz, L.: Mikroprozessortechnik, 3., erw. Aufl., Vogel Verlag Würzburg 1990, S. 212ff."). Diese haben jedoch den Nachteil, daß sie nur auf zusammenhängende Adreßbereiche zugreifen können. Im Hinblick auf die externen Einheiten bedeutet dies, daß nur auf große Datenblöcke direkt zugegriffen werden kann. Diese Datenblöcke enthalten in der Regel jedoch eine Vielzahl nicht benötigter Informationen. Desweiteren bedeutet eine Übertragung dieser großen Datenblöcke über den langsameren Peripheriebus, daß zusätzliche lange Datenübertragungszeiten entstehen. Das Ziel, die Wait-States des Prozessors zu minimieren, wird somit nicht erreicht, da der Prozessor zusätzlich auch auf Daten wartet, die er gar nicht benötigt.

Der Einsatz eines eigenen Microcontrollers zur Lösung des vorgenannten Problems ist sehr aufwendig und teuer.

Hinsichtlich der Realisierung eines Datenaustausches zwischen den externen Einheiten ist bekannt, daß diese Datenübertragungen herkömmlicherweise durch den Prozessor explizit ausgelöst werden. Der Prozessor muß die entsprechende externe Einheit zunächst auslesen und das gelesene Datum dann mit je einem Schreibzugriff pro weiterer externer Einheit über den langsameren Peripheriebus in die übrigen externen Einheiten schreiben. Daraus resultiert eine Vielzahl von Datenzugriffen über den Peripheriebus (ein Lesezugriff und viele Schreibzugriffe) mit den damit verbundenen einzelnen Wartezeiten.

Bei oben beschriebenen, herkömmlichen Lösungsmöglichkeiten des Problems der periodischen Datenübertragung muß demzufolge der Nachteil in Kauf genommen werden, daß die Übertragung entweder langsam ist (DMA-Controller) oder eine Realisierung zu aufwendig ist (eigener Microcontroller).

Aus der europäischen Patentanmeldung EP-0 590 175 ist ein Prozeßsteuerungssystem bekannt, bei dem ein Zweiwegspeicher zwischen zwei getrennte Rechnersysteme geschaltet ist, wobei die Bussysteme dieser beiden Rechnersysteme eine unterschiedliche Geschwindigkeit aufweisen. Durch diesen Zweiwegspeicher kann die Datenübertragung zwischen den beiden Rechnersystemen optimiert werden. Dadurch wird jedoch nicht ermöglicht, Daten von einer Vielzahl externer Einheiten über einen lansamen Peripheriebus so zu einem Rechnersystem zu übertragen das letzteres in seiner Funktionsfähigkeit nicht eingeschränkt wird. Darüber hinaus ist es nicht möglich, Daten zwischen den einzelnen externen Einheiten zu übertragen.

Aus einer anderen europäischen Patentanmeldung EP-0 298 396 ist es bekannt, einen Zweiwegspeicher über einen schnellen Systembus zwischen zwei Prozessoren zu schalten, um auf diese Weise den Datenaustausch zwischen diesen Prozessoren zu optimieren. Jedoch ist ein solcher Zweiwegspeicher nicht auch mit einem langsameren Peripheriebus verbunden, um auf diese Weise einen Datenaustausch zwischen externen Einheiten und schnellem Rechnersystem so zu ermöglichen, daß das Rechnersystem in seiner Arbeitsgeschwindigkeit möglichst wenig beeinträchtigt wird. Der Zweiwegspeicher ist in diesem Fall überhaupt nicht mit dem externen Peripheriebus verbunden. Durch eine solche Anordnung ist es somit auch nicht möglich, einen Datenaustausch zwischen einzelnen externen Einheiten untereinander vorzunehmen.

Der Erfindung liegt daher die Aufgabe zugrunde, ein Verfahren sowie eine dazugehörige Einrichtung der eingangs genannten Art so auszubilden, daß zum einen eine ausreichend schnelle Datenübertragung über den langsameren Peripheriebus gewährleistet wird, daß nur die tatsächlich benötigten Datenwerte und kein unnötiger Ballast übertragen werden, daß der Datenaustausch zwischen den externen Einheiten (Mithörfunktion) mit möglichst wenigen Übertragungen über den langsameren Peripheriebus sowie möglichst geringer Belastung des Prozessors des verarbeitenden Rechensystems erfolgt, und daß Kosten und Aufwand für ein solches Verfahren bzw. die dazugehörige Einrichtung zur periodischen Datenübertragung gering gehalten werden können. Der Prozessor des verarbeitenden Rechnersystems soll nicht belastet werden und nicht in seiner Verarbeitung unterbrochen werden. Die Mithörfunktion in Form eines Datenaustausches zwischen den externen Einheiten möge unter Umgehung des Prozessors separat im Hintergrund ablaufen.

Gemäß der Erfindung wird diese Aufgabe gelöst durch ein Verfahren, gekennzeichnet durch die folgenden Merkmale:
1.1 in einer Initialisierungsphase werden alle pro Übertragungszyklus zu lesenden Adressen der externen Einheiten als Auftragsliste in einen an den Systembus angeschlossenen Schreib-Lese-Speicher abgelegt,
1.2 ein Übertragungszyklus wird jeweils durch ein zyklisches Hardwaresignal angestoßen und die Auftragsliste wird abgearbeitet, indem die jeweilige Adresse durch eine Ablaufsteuerung aus dem Schreib-Lese-Speicher gelesen wird und die gewünschten Daten aus der zu der Adresse zugehörigen externen Einheit geholt werden,
1.3 diese Daten werden über den Peripheriebus in das Dual-Port-RAM eingebracht, woraus sie mindestens ein Prozessor des Rechnersystems bedarfsweise über den Systembus übernimmt,
1.4 beim Versuch des Prozessors ein Datum aus dem Dual-Port-RAM zu lesen, welches dort seit dem letzten Übertragungszyklus noch nicht aktualisiert wurde, veranlaßt eine Prioritätenerkennung die Ablaufsteuerung, den Zugriff auf die das gewünschte Datum enthaltende externe Einheit vorzuziehen und das geholte Datum direkt an den Prozessor weiterzuleiten,
1.5 eine Übertragungsfunktion ermöglicht ein Mithören des von der gelesenen externen Einheit übertragenen Datums durch die übrigen externen Einheiten, indem für diese die Funktion freigegeben und bei der sendenden externen Einheit als einziger die Funktion nicht freigegeben wird, so daß die sendende externe Einheit mit dem entsprechenden Datum antwortet und die übigen externen Einheiten und die Ablaufsteuerung dieses Datum vom Peripheriebus übernehmen.

Darüber hinaus soll der langsame Peripheriebus jedoch für beliebige Zugriffe des Prozessors des verarbeitenden Rechnersystems trotzdem verfügbar bleiben, um eine ausreichende Flexibilität zu erhalten. Desweiteren soll die Mithörfunktion bzw. Broadcast-Funktion besonders effektiv realisiert sein. Eine erste vorteilhafte Ausgestaltung der Erfindung ist gekennzeichnet durch die Merkmale:
2.1 über die Prioritätenerkennung wird einem direkten Zugriff des Prozessors auf den Peripheriebus Vorrang eingeräumt, indem die Abarbeitung der Auftragsliste für die Zeit des direkten Prozessorzugriffs unterbrochen wird,
2.2 die Adreßeinträge für die Broadcast-Funktion werden in der Auftragsliste eingetragen , wobei sich die Adreßeinträge in einen niederprioren Teil zur periodischen Datenübertragung und einen hochprioren Teil für die Broadcast-Funktion unterteilen, so daß der niederpriore Teil nur einmal in einem Übertragungszyklus, der hochpriore Teil der Broadcast-Funktion hingegen mehrmals durchlaufen wird.

Gemäß der Erfindung wird ferner eine Einrichtung zur Verfahrensdurchführung geschaffen, die besonders kostengünstig realisiert werden kann und effektiv ist. Diese Einrichtung ist gekennzeichnet durch die folgenden Merkmale:
3.1 die Einrichtung enthält einen Schreib-Lese-Speicher, in welchen die Adressen der zu lesenden externen Einheiten nach Art einer Auftragsliste abgelegbar sind,
3.2 eine Ablaufsteuerung ist mit dem Schreib-Lese-Speicher und dem Dual-Port-RAM verbunden, wodurch entsprechend der Adressen aus dem Schreib-Lese-Speicher auf die externen Einheiten zuzugreifbar ist und die gelesenen Daten in das Dual-Port-RAM einspeicherbar sind,
3.3 die Ablaufsteuerung beinhaltet eine Prioritätenerkennung, durch die beim Versuch des Prozessors, ein Datum aus dem Dual-Port-RAM zu lesen, welches dort in dem aktuellen Durchlauf der Auftragsliste noch nicht aktualisiert wurde, die Ablaufsteuerung veranlaßbar ist, diesen Zugriff vorzuziehen und daß geholte Datum direkt an den Prozessor weiterzugeben,
3.4 es sind Mittel vorgesehen, durch die das von der gelesenen externen Einheit übertragene Datum durch die übrigen externen Einheiten mithörbar sind, indem durch diese Mittel für dieübrigen externen Einheiten eine Übertragungsfunktion freigegebar ist, wobei bei der sendenden externen Einheit als einziger die Funktion nicht freigegeben wird, so daß die sendende externe Einheit mit dem entsprechenden Datum antwortet und die übigen externen Einheiten und die Ablaufsteuerung dieses Datum vom Peripheriebus übernehmen.

Damit auch die Einrichtung die Möglichkeit beliebiger Zugriffe des Prozessors auf den Peripheriebus unterstützt und die Mithörfuntion möglichst variabel ist, ist eine weitere vorteilhafte Ausgestaltung der Erfindung gekennzeichnet durch die Merkmale:
4.1 die Prioritätenerkennung ist so ausgestaltet, daß direkte Zugriffe des Prozessors auf den Peripheriebus detektierbar sind und diesen Vorrang vor der Abarbeitung der Auftragsliste einräumbar ist,
4.2 die Ablaufsteuerung beinhaltet einen Zähler, über den die Wiederholzeit des hochprioren Teils der Auftragsliste für die Broadcast-Funktion programmierbar ist, indem der Zähler mit dem Start der Abarbeitung der Auftragsliste losläuft und bei jedem Überlauf bzw. Unterlauf, entsprechend seiner Programmierung, den Start des hochprioren Teils der Auftragsliste auflöst.

Der mit der Erfindung erzielte Vorteil besteht insbesondere darin, daß das verarbeitende Rechnersystem in der überwiegenden Anzahl der benötigten Datenzugriffe nur auf ein an die hohe Leistungsfähigkeit des Systembusses angepaßtes Dual-Port-RAM und nicht auf den langsameren Peripheriebus zugreifen muß. Auf diese Art und Weise wird ein schneller Datentransfer von den externen Einheiten auch über den langsameren Peripheriebus zum verarbeitenden Rechnersystem ermöglicht und eine hohe Verarbeitungsgeschwindigkeit des Prozessors aufrechterhalten, da die erforderlichen Wartezustände des Prozessors auf ein Minimum beschränkt werden. Der Prozessor muß nicht für jeden einzelnen Zugriff auf Daten der externen Einheiten seine Verarbeitung anhalten, sondern er kann nun weiter arbeiten und muß nur einmal kurz auf ein sehr leistungsfähiges Dual-Port-RAM zugreifen, welches periodisch durch eine autonome Ablaufsteuerung mit Daten der externen Einheiten gefüllt wird. Über die vom Prozessor entkoppelte und autonom im Hintergrund ablaufende Mithörfunktion zum Datenaustausch zwischen den externen Einheiten wird ein Verlust an Rechenzeit vermieden und gleichzeitig eine hohe Aktualität der Informationen unter den einzelnen externen Einheiten erreicht. Dadurch, daß die Geschwindigkeit der Aktualisierung der Daten zwischen den externen Einheiten variabel ist, kann die Mithörfunktion an die unterschiedlichsten Anforderungen optimal angpaßt werden. Um den Aufwand und die damit verbundenen Kosten der Ablaufsteuerung möglichst gering zu halten, läßt sich diese in einem Anwendungsspezifischen Integrierten Schaltkreis (ASIC) günstig realisieren.

Ein Ausführungsbeispiel der Erfindung ist in den Zeichnungen dargestellt und wird im folgenden näher erläutert. Dabei zeigen:
- FIG 1: eine Blockschaltbild darstellend das Verfahren sowie eine Einrichtung zur Realisierung der Erfindung einer periodischen Datenübertragung.
- FIG 2: Zeitdiagramm zur Organisation und Koordinierung zwischen einer hochprioren und einer niederprioren Liste im Rahmen der Ablaufsteuerung zur Realisierung einer Mithörfunktion zwischen den externe Einheiten.

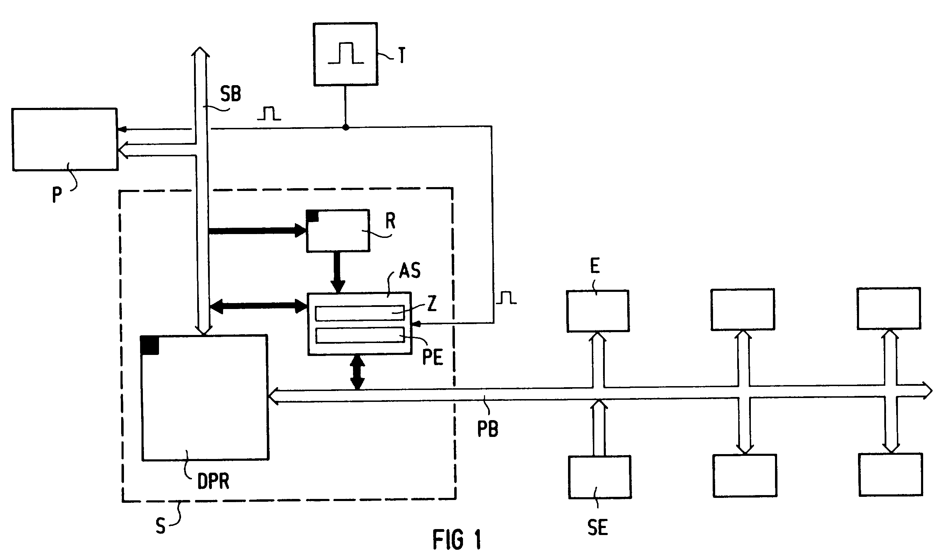

In der Darstellung gemäß FIG 1 ist schematisch ein elektronisches Gerät, beispielsweise eine numerische Steuerung, gezeigt, welches eine periodische Datenübertragung gemäß der Erfindung ermöglicht. Über einen Peripheriebus PB sind hier der Übersichtlichkeit halber nur sechs externe Einheiten, von denen eine sendende Einheit mit SE und stellvertretend für die übrigen empfangenden Einheiten eine mit E bezeichnet ist, beispielsweise Stellglieder oder Überwachungseinheiten einer Werkzeugmaschine, an eine Schaltung S zur periodischen Datenübertragung angeschlossen. Die Schaltung S ihrerseits ist mit dem Systembus SB des Prozessors P des verarbeitenden Rechnersystems verbunden. Die Schaltung S selbst setzt sich zusammen aus einem Dual-Port-RAM DPR, welches mit seinen beiden Datenports zum einen an den Systembus SB und zum anderen an den Peripheriebus PB angeschlossen ist. Desweiteren besitzt die Schaltung S einen herkömmlichen Schreib-Lese-Speicher R, in den über den Systembus SB Daten eingebracht werden können. Diese Daten des Schreib-Lese-Speichers R können von der eigentlichen Ablaufsteuerung AS ausgelesen werden. Die Ablaufsteurung AS, z.B. realisiert in Form eines Anwenderspezifischen Integrierten Schaltkreises (ASIC), besitzt einen Zugriff sowohl auf den Peripheriebus PB als auch auf den Systembus SB des verarbeitenden Rechnersystems. Bestandteil der Ablaufsteuerung AS ist eine Schaltung zur Prioritätenerkennung PE. Desweiteren beinhaltet die Ablaufsteuerung AS einen Zähler Z. Über einen Taktgenerator T wird ein zyklisches Hardwaresignal erzeugt, mit dem die Ablaufsteuerung AS getriggert und damit eine neue Periode der Datenübertragung eingeleitet wird. Desweiteren gelangt das Triggersignal des Taktgenerators T zum Prozessor P des verarbeitenden Rechnersystems.

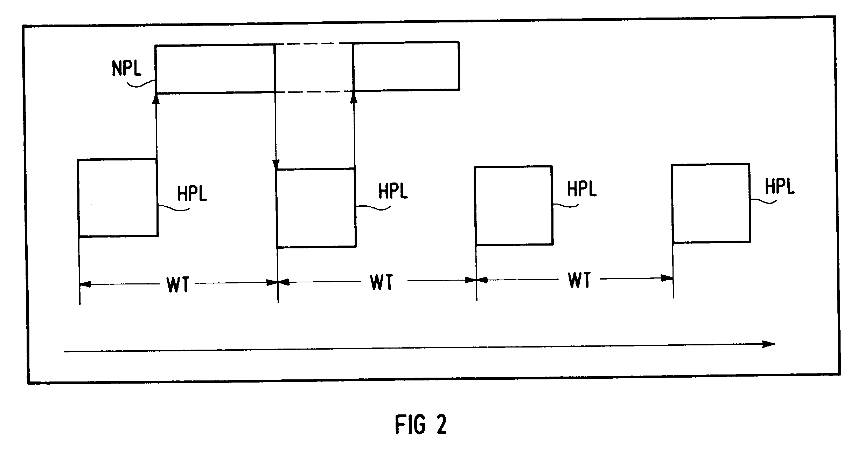

In der Darstellung gemäß FIG 2 ist die Organisation und Koordinierung zwischen einer hochprioren Liste HPL und einer niederprioren Liste NPL schematisch dargestellt. Darin ist zu erkennen, daß sich eine hochpriore Liste HPL in bestimmten Zeitintervallen, einer Wiederholzeit WT, wiederholt, wohingegen eine weitere niederpriore Liste NPL mit geringerer Frequenz abläuft. Dabei wird deutlich, daß die niederpriore Liste NPL in regelmäßigen Abständen, nämlich nach Ablauf der Wiederholzeit WT unterbrochen wird, und erneut die hochpriore Liste HPL durchlaufen wird. Hierdurch wird erkennbar, daß die niederpriore Liste NPL, welche für die periodische Datenübertragung steht, nur einmal in einem Bearbeitungszyklus durchlaufen wird, während die hochpriore Liste HPL, durch welche die Mithörfunktion zum Datenaustausch zwischen den externen Einheiten realisiert wird, mehrmals durchlaufen wird.

In einer Initialisierungsphase werden alle zu lesenden Adressen der externen Einheiten SE bzw. E über den Systembus SB in dem Schreib-Lese-Speicher R der Schaltung S abgelegt. Die Reihenfolge der Adressen, welche beliebig sein kann, wird als Auftragsliste bezeichnet und gibt die Abfolge wieder, nach der die Daten aus den externen Einheiten SE bzw. E ausgelesen werden. Der Beginn einer Periode der Datenübertragung wird durch ein Triggersignal des Taktgenerators T, welches auf die Ablaufsteuerung AS wirkt, angestoßen und die Ablaufsteuerung AS beginnt daraufhin, die Auftragsliste, d.h. die im Schreib-Lese-Speicher R abgelegten Adressen, abzuarbeiten. Dazu wird die entsprechende externe Einheit SE bzw. E adressiert und die zugehörigen Daten, welche der Prozessor P benötigt, werden über den relativ zum Systembus SB langsameren Peripheriebus PB geholt und systematisch im Dual-Port-RAM DPR abgelegt, daß an die Leistungsfähigkeit des Systembusses SB angepaßt ist, indem die Zugriffszeit des Dual-Port-RAM DPR so bemessen wird, daß entsprechend der Taktrate des Systembusses SB pro Prozessortaktzyklus mindestens ein Datum aus dem Dual-Port-RAM DPR ausgelesen werden kann. Dabei werden nur die tatsächlich benötigten Datenwerte einer sendenden externen Einheit SE in das Dual-Port-RAM DPR übertragen. Nach Ablauf einer Periode der Datenübertragung liegen im Dual-Port-RAM DPR alle benötigten Daten der externen Einheiten SE bzw. E aktualisiert vor. Mit Auslösung des nächsten Übertragungsvorganges durch das Triggersignal des Taktgenerators T wird auch der Prozessor P darüber informiert, daß nun alle von diesem benötigten Daten im Dual-Port-RAM DPR vorliegen und vom Prozessor P, mit ungleich höherer Datenübertragungsrate als sie mit dem Peripheriebus PB möglich ist, über den Systembus SB abgerufen werden können. Dadurch, daß die zeitintensive Übertragung der Daten aus den externen Einheiten SE bzw. E gesteuert durch die Ablaufsteuerung AS im Hintergrund periodisch durchgeführt und die gelesenen Werte in einem leistungsfähigen Dual-Port-RAM DPR abgelegt werden, wird der Prozessor P dadurch nicht belastet bzw. in der Abarbeitung seines Programmes unterbrochen. Der Prozessor P kann nunmehr die von ihm benötigten Daten mit hoher Datentransferrate über den Systembus SB aus dem Dual-Port-RAM DPR auslesen und muß dementsprechend erheblich weniger Wartezustände, sogenannte Wait-States, durchführen.
Trotzdem bleibt der Peripheriebus PB für den Prozessor P für beliebige Zugriffe verfügbar. Die Prioritätenerkennung PE, die Teil der Ablaufsteuerung AS ist, detektiert einen direkten Zugriff des Prozessors auf den Peripheriebus PB, indem untersucht wird, auf welchen Adressbereich der Prozessor P zuzugreifen versucht. Liegt die Adresse, die der Prozessor P auf den Systembus gibt, nicht im Bereich des Dual-Port-RAM DPR, sondern beispielsweise in einem Memory-Mapped-I/O-Speicherbereich, in dem der Peripheriebus PB angesprochen wird, so handelt es sich um einen direkten Zugriff des Prozessors P. Daraufhin räumt die Ablaufsteuerung AS diesem direkten Zugriff Vorrang ein, indem die Abarbeitung der Auftragsliste, bestehend aus den Adressen der externen Einheiten SE bzw. E im Schreib-Lese-Speicher R, kurz angehalten wird. Dies ist vor allem dann von Bedeutung, wenn der Prozessor P auf selten benötigte Daten zugreifen muß, die nicht zyklisch übertragen werden, da die dazugehörigen Adressen nicht in der Ablaufliste im Schreib-Lese-Speicher R enthalten sind. Ein solcher direkter Zugriff des Prozessors P auf den Peripheriebus PB ist deshalb vertretbar, da er selten stattfindet und sich die damit verbundene Wartezeit des Prozessors P nur unbedeutend auf die Abarbeitungsgeschwindigkeit des Programmes durch den Prozessor P des verarbeitenden Rechnersystems auswirkt. Eine weitere Aufgabe der Prioritätenerkennung PE liegt darin, festzustellen, ob der Prozessor P versucht, ein Datum aus dem Dual-Port-RAM DPR zu lesen, das dort seit dem letzten Trigger bzw. in der aktuellen Datenübertragungsperiode noch nicht aktualisiert wurde. Ist dies der Fall, so veranlaßt die Prioritätenerkennung PE die Ablaufsteuerung AS dazu, diesen Zugriff vorzuziehen, indem die Ablaufsteuerung AS das benötigte Datum direkt aus der dazugehörigen nun sendenden externen Einheit SE liest, über den Peripheriebus PB überträgt und unter Umgehung des Dual-Port-RAMs DPR auf den Systembus SB legt, von wo es direkt vom Prozessor P gelesen werden kann. Der Prozessor P des bearbeitenden Rechnersystems selbst erkennt nicht, ob sein Zugriff in das Dual-Port-RAM DPR erfolgt oder ob die Ablaufsteuerung die Übertragung des benötigten Datums der externen Einheit SE bzw. E vorgezogen hat.

Zur Realisierung der Broadcast-Funktion übernehmen bei einem Lesezugriff, sei es von der Ablaufsteuerung oder ein Direktzugriff des Prozessors des verarbeitenden Rechnersystems, alle externen Einheiten SE bzw. E das Datum vom Bus. Für die externen Einheiten E, die das Broadcast-Datum übernehmen sollen, muß die Broadcast-Funktion freigegeben werden. Nur bei der sendenden externen Einheit SE deren Datum ausgelesen werden soll, wird die Broadcast-Funktion nicht freigegeben. Diese nicht freigegebene externe Einheit SE antwortet bei einem Lesezugriff auf den Peripheriebus PB durch die Ablaufsteuerung AS oder den Prozessor P des verarbeitenden Rechnersystems, indem es das entsprechende angeforderte Datum auf den Peripheriebus legt und neben der Ablaufsteuerung AS auch die übrigen externen Einheiten E diese Daten lesen. Die Adressen für die Broadcast-Funktion müssen ebenfalls in die Auftragsliste im Schreib-Lese-Speicher R für die periodische Datenübertragung eingetragen werden. Um zu erreichen, daß die übrigen externen Einheiten E durch die Mithörfunktion möglichst aktuelle Daten erhalten, muß die Broadcast-Funktion bzw. Mithörfunktion mehrmals in einem Übertragungszyklus ausgeführt werden. Damit die Broadcast-Funktion mit höherer Frequenz als die übrigen oben dargestellten Adressen der Auftragsliste zur periodischen Datenübertragung abläuft, werden die Adreßeinträge der Auftragsliste in eine niederpriore Liste NPL zur Realisierung der periodischen Datenübertragung und eine hochpriore Liste HPL zur Realisierung der Broadcast-Funktion eingeteilt. Während die niederpriore Liste NPL nur einmal in einem Bearbeitungszyklus durchlaufen wird, wird die hochpriore Liste HPL, enthaltend die Adressen der mithörenden externen Einheiten E, mehrmals durchlaufen. Um die Broadcast-Funktion möglichst flexibel zu gestalten, wird die Wiederholfrequenz bzw. Wiederholzeit WT der hochprioren Liste HPL variabel gehalten. Hierzu verfügt die Ablaufsteuerung AS über einen programmierbaren Zähler Z, der mit dem Start eines Bearbeitungszyklus losläuft und bei jedem Überlauf bzw. Unterlauf, entsprepchend seiner Programmierung, den Start des hochprioren Teils HPL der Auftragsliste auslöst. Somit bedeutet eine niedrige Zählergrenze, daß eine hohe Wiederholfrequenz bzw. geringe Wiederholzeit WT der hochprioren Liste HPL eingestellt ist. Umgekehrt hat eine hohe Zählergrenze eine niedrige Wiederholfrequenz bzw. lange Wiederholzeit WT zur Folge.

Ein mögliches vorteilhaftes Ausführungsbeispiel besteht in einer numerischen Steuerung einer Werkzeugmaschine. Die externen Einheiten SE bzw.E können z.B. Steuerungen für einen Antrieb mit entsprechender Lage-Ist-Wert-Erfassung des Umlaufwinkels oder ein Zustellglied für die Positionierung eines Schlittens, ein Sensor zur Ermittlung der Referenzlage eines Werkstückes oder eine Einheit zur Überwachung der Motorentemperatur sein. Bei jeder dieser externen Einheiten SE bzw. E fällt eine große Anzahl von Daten an. Davon wird jedoch nur eine geringe Teilmenge vom Prozessor P zur Verarbeitung benötigt. Jede der externen Einheiten SE bzw. E besteht aus einer eigenen Schaltungsanordnung, die im Regelfall auf einer eigenen Hardwarekarte untergebracht ist. Genauso sind das verarbeitende Rechnersystem mit dem Prozessor P und die Schaltung S zur periodischen Datenübertragung auf einer eigenen Schaltkarte angesiedelt. Diese Steuerungskarte und die Einschübe der entsprechenden externen Einheiten SE und E sind nun in einem Schaltschrank dergestalt angeordnet, daß sie über einen eigenen Bus, den Peripheriebus PB, miteinander verbunden sind. Zur kostengünstigen Herstellung der Ablaufsteuerung AS ist deren gesamte Logik einschließlich der Prioritätenerkennung PE und dem Zähler Z in einem Anwendungsspezifischen Integrierten Schaltkreis (ASIC) untergebracht. Aufgrund des gemäß der Erfindung realisierten periodischen Datenübertragungsverfahrens können die benötigten Daten der einzelnen externen Einheiten SE und E in einer ausreichend hohen Datentransferate zum verarbeitenden Rechnersystem mit mindestens einem Prozessor P übertragen werden, ohne daß der Prozessor P in seiner Verarbeitungsgeschwindigkeit durch den Einsatz des langsameren Peripheriebusses PB eingeschränkt wird.

Aufgrund der hohen zu übertragenden Datenvolumina und der zeitkritischen Übertragungsgeschwindigkeiten tauschen die externen Einheiten SE und E mittels der Broadcast-Funktion unabhängig Daten aus. Dies ist vor allem dann notwendig, wenn an mehreren externen Einheiten SE und E koordinierte Aktionen durchgeführt werden sollen. Das ist z.B. dann der Fall, wenn sich mehrer Wellen synchron drehen sollen. Mittels der Broadcast-Funktion werden die Momentangeschwindigkeiten und Lage-Ist-Werte der einzelnen Wellen ständig untereinander ausgetauscht und aktualisiert, so daß die Bewegungen der Wellen zueinander synchron gehalten werden können. Eine andere vorteilhafte Anwendung für die Broadcast-Funktion bietet sich z.B. dann an, wenn zum einen der Vorschub und zum anderen die Zustellung eines Drehmeißels an einer numerisch gesteuerten Drehmaschine, z.B. zum Drehen eines Kegels, miteinander koordiniert werden müssen. Eine solche zeitkritische Anwendung erfordert einen direkten Austausch der Daten zwischen den einzelnen externen Einheiten unter Umgehung des zentral verarbeitenden Rechnersystems, wie es durch die vorliegende Erfindung ermöglicht wird.

## Patentansprüche

1. Verfahren zur zyklischen Übertragung von Daten externer Einheiten (E, SE) über einen Peripheriebus (PB) zur Verarbeitung in einem Rechnersystem mit schnellerem Systembus (SB) über ein Dual-Port-RAM (DRP) mit an die Leistungsfähigkeit des Systembusses (SB) angepaßter Zugriffszeit, welches sowohl an den Peripheriebus (PB) als auch an den Systembus (SB) angeschlossen wird, wobei mindestens ein Prozessor (P) des Rechnersystems bedarfsweise die im Dual-Port-RAM (DPR) angesammelten Daten übernimmt, sowie zur separaten Übertragung zwischen externen Einheiten (SE, E) untereinander, **gekennzeichnet** durch die folgenden Verfahrensschritte:
1.1 in einer Initialisierungsphase werden alle pro Übertragungszyklus zu lesenden Adressen der externen Einheiten (E,SE) als Auftragsliste in einen an den Systembus angeschlossenen Schreib-Lese-Speicher (R) abgelegt,
1.2 ein Übertragungszyklus wird jeweils durch ein zyklisches Hardwaresignal (T) angestoßen und die Auftragsliste wird abgearbeitet, indem die jeweilige Adresse durch eine Ablaufsteuerung (AS) aus dem Schreib-Lese-Speicher (R) gelesen wird und die gewünschten Daten aus der zu der Adresse zugehörigen externen Einheit (SE) geholt werden,
1.3 diese Daten werden über den Peripheriebus in das Dual-Port-RAM (DRP) eingebracht, woraus sie mindestens ein Prozessor (P) des Rechnersystems bedarfsweise über den Systembus übernimmt,
1.4 beim Versuch des Prozessors (P) ein Datum aus dem Dual-Port-RAM (DPR) zu lesen, welches dort seit dem letzten Übertragungszyklus noch nicht aktualisiert wurde, veranlaßt eine Prioritätenerkennung (PE) die Ablaufsteuerung (AS), den Zugriff auf die das gewünschte Datum enthaltende externe Einheit (SE) vorzuziehen und das geholte Datum direkt an den Prozessor (P) weiterzuleiten,
1.5 eine Übertragungsfunktion ermöglicht ein Mithören des von der gelesenen externen Einheit (SE) übertragenen Datums durch die übrigen externen Einheiten (E), indem für diese (E) die Funktion freigegeben und bei der sendenden externen Einheit (SE) als einziger die Funktion nicht freigegeben wird, so daß die sendende externe Einheit (SE) mit dem entsprechenden Datum antwortet und die übigen externen Einheiten (E) und die Ablaufsteuerung (AS) dieses Datum vom Peripheriebus (PB) übernehmen.

2. Verfahren nach Anspruch 1, **gekennzeichnet** durch folgende Verfahrensschritte:
2.1 über die Prioritätenerkennung (PE) wird einem direkten Zugriff des Prozessors (P) auf den Peripheriebus (PB) Vorrang eingeräumt, indem die Abarbeitung der Auftragsliste für die Zeit des direkten Prozessorzugriffs unterbrochen wird,
2.2 die Adreßeinträge für die Broadcast-Funktion werden in der Auftragsliste eingetragen , wobei sich die Adreßeinträge in einen niederprioren Teil (NPL) zur periodischen Datenübertragung und einen hochprioren Teil (HPL) für die Broadcast-Funktion unterteilen, so daß der niederpriore Teil (NPL) nur einmal in einem Übertragungszyklus, der hochpriore Teil (HPL) der Broadcast-Funktion hingegen mehrmals durchlaufen wird.

3. Einrichtung zur zyklischen Übertragung von Daten externer Einheiten (E, SE) über einen Peripheriebus (PB) zur Verarbeitung in einem Rechnersystem mit schnellerem Systembus (SB) über ein Dual-Port-RAM (DRP) mit an die Leistungsfähigkeit des Systembusses (SB) angepaßter Zugriffszeit, welches sowohl an den Peripheriebus (PB) als auch an den Systembus (SB) angeschlossen ist, wobei mindestens ein Prozessor (P) des Rechnersystems bedarfsweise die im Dual-Port-RAM (DPR) angesammelten Daten übernimmt, sowie zur separaten Übertragung zwischen externen Einheiten (SE, E) untereinander, **gekennzeichnet** durch die folgenden Merkmale:
3.1 die Einrichtung enthält einen Schreib-Lese-Speicher (R), in welchen die Adressen der zu lesenden externen Einheiten (SE,E) nach Art einer Auftragsliste abgelegbar sind,
3.2 eine Ablaufsteuerung (AS) ist mit dem Schreib-Lese-Speicher (R) und dem Dual-Port-RAM (DPR) verbunden, wodurch entsprechend der Adressen aus dem Schreib-Lese-Speicher (R) auf die externen Einheiten (SE,E) zuzugreifbar ist und die gelesenen Daten in das Dual-Port-RAM (DPR) einspeicherbar sind,
3.3 die Ablaufsteuerung (AS) beinhaltet eine Prioritätenerkennung (PE), durch die beim Versuch des Prozessors (P), ein Datum aus dem Dual-Port-RAM (DPR) zu lesen, welches dort in dem aktuellen Durchlauf der Auftragsliste noch nicht aktualisiert wurde, die Ablaufsteuerung (AS) veranlaßbar ist, diesen Zugriff vorzuziehen und daß geholte Datum direkt an den Prozessor (P) weiterzugeben,
3.4 es sind Mittel vorgesehen, durch die das von der gelesenen externen Einheit (SE) übertragene Datum durch die übrigen externen Einheiten (E) mithörbar sind, indem durch diese Mittel für dieübrigen externen Einheiten (E) eine Übertragungsfunktion freigegebar ist, wobei bei der sendenden externen Einheit (SE) als einziger die Funktion nicht freigegeben wird, so daß die sendende externe Einheit (SE) mit dem entsprechenden Datum antwortet und die übigen externen Einheiten (E) und die Ablaufsteuerung (AS) dieses Datum vom Peripheriebus (PB) übernehmen.

4. Einrichtung nach Anspruch 3, **gekennzeichnet** durch folgende Merkmale:
4.1 die Prioritätenerkennung (PE) ist so ausgestaltet, daß direkte Zugriffe des Prozessors (P) auf den Peripheriebus (PB) detektierbar sind und diesen Vorrang vor der Abarbeitung der Auftragsliste einräumbar ist,
4.2 die Ablaufsteuerung (AS) beinhaltet einen Zähler (Z), über den die Wiederholzeit (WT) des hochprioren Teils (HPL) der Auftragsliste für die Broadcast-Funktion programmierbar ist, indem der Zähler (Z) mit dem Start der Abarbeitung der Auftragsliste losläuft und bei jedem Überlauf bzw. Unterlauf, entsprechend seiner Programmierung, den Start des hochprioren Teils (HPL) der Auftragsliste auflöst.

## Claims

1. Method for the cyclic transmission of data of external units (E, SE) by way of a peripheral bus (PB) for processing in a computer system with a faster system bus (SB) by way of a dual port RAM (DRP) with access time adapted to the capacity of the system bus (SB), which is connected both to the peripheral bus (PB) and to the system bus (SB), with at least one processor (P) of the computer system if necessary accepting the data collected in the dual port RAM (DPR), and for separate transmission between external units (SE, E) among each other, characterized by the following procedural steps:
1.1 In an initialization phase all addresses of the external units (E,SE) to be read per transmission cycle are deposited as request list into a write-read memory (R) connected to the system bus.
1.2 A transmission cycle is in each case initiated by a cyclic hardware signal (T) and the request list is processed in that the respective address is read from the write-read memory (R) by way of a sequence control system (R) and the desired data is fetched from the external unit (SE) belonging to the address.
1.3 This data is introduced by way of the peripheral bus into the dual port RAM (DRP), from which it is accepted by at least one processor (P) of the computer system if necessary by way of the system bus.
1.4 In the attempt of the processor (P) to read data from the dual port RAM (DPR), which data has not yet been updated there since the last transmission cycle, a priority recognition (PE) causes the sequence control system (AS) to give preference to the access to the external unit (SE) containing the desired data and to relay the fetched data directly to the processor (P).
1.5 A transmission function makes it possible to monitor the data transmitted by the read external unit (SE) by way of the remaining external units (E), in that for the latter (E) the function is enabled and, with the transmitting external unit (SE) as the only one, the function is not enabled, with the result that the transmitting external unit (SE) answers with the appropriate data and the remaining external units (E) and the sequence control system (AS) accept this data from the peripheral bus (PB).

2. Method according to claim 1, characterized by the following procedural steps:
2.1 By way of the priority recognition (PE) a direct access of the processor (P) to the peripheral bus (PB) is given priority, in that the processing of the request list is interrupted for the period of the direct processor access.
2.2 The address entries for the broadcast function are entered in the request list, with the address entries being divided into a low-priority part (NPL) for periodical data transmission and a high-priority part (HPL) for the broadcast function, with the result that the low-priority part (NPL) is only run through once in a transmission cycle, whereas the high-priority part (HPL) of the broadcast function is run through several times.

3. Device for the cyclic transmission of data of external units (E, SE) by way of a peripheral bus (PB) for processing in a computer system with a faster system bus (SB) by way of a dual port RAM (DRP) with access time adapted to the capacity of the system bus (SB), which is connected both to the peripheral bus (PB) and to the system bus (SB), with at least one processor (P) of the computer system if necessary accepting the data collected in the dual port RAM (DPR), and for separate transmission between external units (SE, E) among each other, characterized by the following features:
3.1 The device contains a write-read memory (R) in which the addresses of the external units (SE, E) to be read can be deposited like a request list.
3.2 A sequence control system (AS) is connected to the write-read memory (R) and the dual port RAM (DPR), whereby corresponding to the addresses from the write-read memory (R) the external units (SE, E) can be accessed and the read data can be stored in the dual port RAM (DPR).
3.3 The sequence control system (AS) contains a priority recognition (PE) by means of which, upon the attempt of the processor (P) to read data from the dual port RAM (DPR), which data has not yet been updated there in the current run-through of the request list, the sequence control system (AS) can be caused to give preference to this access and to relay the fetched data directly to the processor (P).
3.4 Means are provided by way of which the data transmitted by the read external unit (SE) can be monitored by the remaining external units (E), in that by way of these means a transmission function can be enabled for the remaining external units (E), whereby, with the transmitting external unit (SE) as the only one, the function is not enabled, so that the transmitting external unit (SE) answers with the appropriate data and the remaining external units (E) and the sequence control system (AS) accept this data from the peripheral bus (PB).

4. Device according to claim 3, characterized by the following features:
4.1 The priority recognition (PE) is developed in such a way that direct accesses of the processor (P) to the peripheral bus (PB) can be detected and these can be given priority over the processing of the request list.
4.2 The sequence control system (AS) contains a counter (Z) by way of which the repetition time (WT) of the high-priority part (HPL) of the request list for the broadcast function can be programmed, in that the counter (Z) starts when the processing of the request list begins, and upon each overtravel and undertravel, corresponding to its programming, terminates the start of the high-priority part (HPL) of the request list.

## Revendications

1. Procédé de transmission cyclique de données d'unités externes (E, SE) par l'intermédiaire d'un bus (PB) périphérique pour le traitement dans un système informatique à bus (SB) de système rapide par l'intermédiaire d'une mémoire RAM (DRP) à double accès, qui a un temps d'accès adapté à la capacité du bus (SB) du système et qui est connecté à la fois au bus (PB) périphérique et au système (SB) de bus, au moins un processeur (P) du système informatique prenant en charge en cas de besoin les données rassemblées dans la mémoire RAM (DPR) à double accès, ainsi que pour la transmission séparée entre des unités externes (SE, E), caractérisé par les étapes suivantes :
1.1 on enregistre dans une phase d'initialisation, toutes les adresses des unités externes (E, SE) à lire par cycles de transmission en tant que liste enregistrée dans une mémoire vive (R) connectée au système de bus,
1.2 on déclenche un cycle de transmission par un signal (T) cyclique de matériel et on traite la liste enregistrée, en lisant l'adresse considérée dans la mémoire vive (R) par une commande (AS) de déroulement et en allant chercher les données souhaitées dans l'unité (SE) externe associée à l'adresse,
1.3 on introduit ces données par l'intermédiaire du bus périphérique dans la mémoire RAM (DRP) à double accès, d'où au moins un processeur (P) du système informatique les prend en charge en cas de besoin par l'intermédiaire du bus de système,
1.4 si le processeur (P) essaie de lire dans la mémoire RAM (DPR) à double accès une donnée, que l'on n'a pas encore mise à jour depuis le dernier cycle de transmission, un dispositif (PE) de reconnaissance de priorité amène la commande (AS) de déroulement à préférer l'accès à l'unité (SE) externe contenant la donnée souhaitée et à retransmettre la donnée prise directement au processeur (P),
1.5 une fonction de transmission permet aux unités externes restantes (E) d'écouter la donnée transmise par l'unité externe lue (SE), en validant pour cette unité (E) la fonction et en ne validant pas la fonction pour la seule unité externe (SE) émettrice, de sorte que l'unité externe (SE) émettrice réponde par la donnée correspondante et que les autres unités externes (E) et la commande (AS) de déroulement prennent en charge cette donnée par le bus périphérique (PB).

2. Procédé suivant la revendication 1, caractérisé par les étapes suivantes :
2.1 on accorde, par l'intermédiaire du dispositif (PE) de reconnaissance de priorité, la priorité d'un accès direct du processeur (P) au bus périphérique (PB), en interrompant le traitement de la liste enregistrée pendant la durée de l'accès direct du processeur,
2.2 on introduit les entrées d'adresses pour la fonction de diffusion dans la liste enregistrée, les entrées d'adresses étant subdivisées en une partie (NPL) de faible priorité pour la transmission périodique de données et en une partie (HPL) de grande priorité pour la fonction de diffusion, de sorte que la partie (NPL) de priorité petite ne soit parcourue qu'une fois dans un cycle de transmission et que la partie (HPL) de priorité grande de la fonction de diffusion soit parcourue au contraire plusieurs fois.

3. Dispositif pour la transmission cyclique de données d'unités (E, SE) externes par l'intermédiaire d'un bus périphérique (PB) pour le traitement dans un système informatique à bus (SB) de système rapide par l'intermédiaire d'une mémoire RAM (DRP) à double accès, qui a un temps d'accès adapté à la capacité du bus (SB) de système et qui est connecté à la fois au bus périphérique (PB) et au bus (SB) de système, au moins un processeur (P) du système informatique prenant en charge en cas de besoin les données collectées dans la mémoire RAM (DPR) à double accès, ainsi que pour la transmission séparée entre des unités externes (SE, E), caractérisé par les caractéristiques suivantes :
3.1 le dispositif comprend une mémoire vive (R), dans laquelle les adresses des unités (SE, E) externes à lire peuvent être enregistrées à la manière d'une liste enregistrée,
3.2 une commande (AS) de déroulement est reliée à la mémoire vive (R) et à la mémoire RAM (DPR) à double accès, ce qui fait que les unités externes (SE, E) sont accessibles en fonction des adresses provenant de la mémoire vive (R) et que les données lues peuvent être mémorisées dans la mémoire RAM (DPR) à double accès,
3.3 la commande (AS) de déroulement comprend un dispositif (PE) de reconnaissance de priorité, par lequel la commande (AS) de déroulement peut être amenée, lorsque le processeur (P) essaie de lire une donnée dans la mémoire RAM (DPR) à double accès qui n'a pas encore été mise à jour au cours du parcours actuel de la liste enregistrée, à préférer cet accès et à retransmettre la donnée prise directement au processeur (P),
3.4 il est prévu des moyens, par lesquels la donnée transmise par l'unité externe (SE) lue peut être écoutée par les autres unités externes (E), par le fait qu'une fonction de transmission peut être validée pour les autres unités (E) externes par ces moyens, la fonction n'étant validée que pour la seule unité externe (SE) émettrice, de sorte que l'unité (SE) externe émettrice répond par la donnée correspondante et que les autres unités (E) externes et la commande (AS) de déroulement prennent en charge cette donnée par le bus (PB) périphérique.

4. Dispositif suivant la revendication 3, caractérisé par les caractéristiques suivantes :
4.1 le dispositif (PE) de reconnaissance de priorité est tel que des accès directs du processeur (P) au bus périphérique (PB) puissent être détectés et que cette priorité puisse être accordée avant le traitement de la liste de commande,
4.2 la commande (AS) de déroulement comprend un compteur (Z), par l'intermédiaire duquel le temps (WT) de répétition de la partie (HPL) de grande priorité de la liste enregistrée pour la fonction de diffusion peut être programmé, par le fait que le compteur (Z) démarre au début du traitement de la liste enregistrée et déclenche le début de la partie (HPL) de grande priorité de la liste enregistrée à chaque dépassement par le haut ou par le bas.
